# EUROPEAN PATENT SPECIFICATION

(11) **EP 0 550 088 B1**
(45) Date of publication and mention of the grant of the patent: **20.05.1998**
(21) Application number: 92203886.4
(22) Date of filing: 14.12.1992
(51) Int. Cl.: G06T 3/00

(54) **Image processing arrangement**
Bildverarbeitungsanordnung
Dispositif de traitement d'images

(30) Priority: 20.12.1991 GB 9127108
(43) Date of publication of application: 07.07.1993
(73) Proprietor: PHILIPS ELECTRONICS UK LIMITED, Croydon CR9 3QR (GB); Philips Electronics N.V., 5621 BA Eindhoven (NL)
(72) Inventor: Penna, David Edward, Redhill, Surrey RH1 5HA (GB)
(74) Representative: White, Andrew Gordon

(56) References cited:
- EP-A- 0 232 081
- EP-A- 0 312 235
- PATENT ABSTRACTS OF JAPAN vol. 015, no. 433 (P-1271)5 November 1991 & JP-A-03 179 600 (PIONEER ELECTRON CORP) 5 August 1991
- PHILIPS RES. LAB. REDHILL REV. (UK), PHILIPS RESEARCH LABORATORIES, REDHILL, REVIEW, 1990, UK, 11 - 14 Richards N D 'Showing Photo CD pictures on CD-I'

## Description

The invention relates to an image processing apparatus comprising image memory means for the storage of an input array of pixel values defining an input image and a microprocessor operating under control of a program stored in a program memory to systematically select pixel values of the input array to generate successive output pixel values defining an output image, the systematic selection being dependent on at least one parameter value received by the apparatus, and the programmed microprocessor forming means responsive to the received parameter value for generating and storing in the program memory at least one machine code program segment,specific to the received parameter value. The invention further relates to a corresponding method of image processing.

There are many forms and applications of image processing arrangements, depending on the manner of systematic selection of pixel values. Typically a group or "kernel" of two or more input pixel values will be selected and combined to form each output pixel value. The image may be changed in size shape or orientation, and may also be filtered by simple interpolation or a more complex function. The parameter value might for example be a horizontal scaling factor.

Image processing is ideally performed by specialised hardware, but there is an increasing demand for image processing to be performed by general purpose microprocessors in personal computers and home entertainment systems. Unfortunately, such processors are not optimised for the operations required, and tend to take many seconds or even minutes to process a single image. One reason for this is the need for pixel-by-pixel decisions as to which input pixel values should be selected to generate each output pixel value and what weighting coefficients to apply. Another reason for this is the time taken to multiply input pixel values by the necessary weighting coefficients.

An example of such an image processing apparatus, in the form of a graphics image editor, is described in European Patent Application EP-A-0 312 235 (AT&T). From interactively input user commands, an image transformation function is generated by the editor in the form of a program, which program is then executed for each pixel of the image to achieve the desired transformation.

In a particular area of application for the invention, digitised images are now being published on media including on-line data bases and optical memory discs (CD-ROM). In the display of such images it is often desirable that the user can selectively zoom in or out on (enlarge or reduce) a selected area of the stored image. In particular, such zooming requires filtering of pixel data, for example by interpolation, in order to avoid obtrusive mosaic effects and aliasing.

The Photo CD system, described at pages 316-323 in IEEE ICCE Digest 1991, even enables photographs taken by the individual consumer to be digitised and stored on CD-ROM for selective retrieval and display. The Photo CD player itself comprises essentially dedicated hardware for display of the images with very limited capabilities for panning and zooming different parts of an image.

In the paper "Photo CD and CD-I - A Marriage of Great Convenience", IEEE ICCE Digest 1991 at pages 322-323, Norman Richards describes how a Compact Disc Interactive (CD-I) player can also read and display image data from a Photo CD disc. The fact that the CD-I player includes a general purpose microprocessor controllable by programs which themselves are stored on the disc means that in principle any zoom and filter function can be applied to the retrieved data before display. However, a problem that arises in practice is the time taken by the microprocessor to perform a generalised zoom and filtering operation with a user defined scaling factor. The same problem arises in the retrieval and display of images using general purpose personal computers, for example in so-called desktop publishing.

It is an object of the invention to provide an improved microprocessor-based image processing arrangement in particular to enable the provision of such an arrangement using pre-existing low-cost hardware such as the CD-I player or personal computer.

The apparatus and method of the invention is defined in claim 1 and 4 respectively, preferred embodiments are disclosed in dependent claims.

The invention provides an image processing apparatus as, set forth in the opening paragraph, characterised in that the machine code segment generated by the programmed microprocessor controls the microprocessor to systematically select pixel values of the input image to generate a subset of pixel values of the output image each time the machine code program segment is executed and in that means are provided for causing repeated execution of the generated program segment or segments so as to generate a plurality of subsets of pixel values accumulating to define the output image, wherein each of the subsets of output pixels comprises one pixel row of the output image. While the arrangement remains responsive to the received parameter value, the decision overhead this causes can be concentrated in the once-only act of compiling the program segment(s), and substantially eliminated from the repetitive sequence of actions required to generate the output image.

Also in accordance with the present invention there is provided a method of image processing comprising storing an input array of pixel values defining an input image and systematically selecting pixel values of the input array to generate successive output pixel values defining an output image, the system of selection being dependent on at least one received parameter value, and the selection process comprising generating and storing at least one machine code program segment, specific to the received parameter value; characterised in that the machine code program segment controls the systematic selection of pixel values of the input image to generate a subset of pixel values of the output image each time it is executed, and the method further comprising the step of repeatedly executing the generated program segment or segments so as to generate a plurality of subsets of pixel values accumulating to define the output image, with each subset of output pixels comprising one pixel row of the output image.

With each subset of output pixel values comprising one pixel row of the output image, when scaling an image of 512 pixel rows in the horizontal direction, the per-pixel decision overhead can be reduced by a factor of 512.

Further variations and advantageous features of the invention will be apparent to the skilled reader from a consideration of the embodiments described below.

By way of example only, the Figures present an embodiment in the form of an interactive multimedia application using the Compact Disc Interactive (CD-I) player to process images stored on optical disc.
Figure 1 is a block schematic diagram of a CD-I player suitable for embodying an image processing arrangement in accordance with the invention;
Figure 2 illustrates a uniform zoom filtering operation performed on an input image;
Figure 3 illustrates the decomposition of the uniform zoom operation into separate vertical and horizontal filtering processes;
Figure 4 is a flowchart illustrating the operation of an image processing arrangement embodying the present invention; and
Figure 5 comprises schematic flowcharts illustrating the elimination of decision overhead in the embodiment of Figure 4.

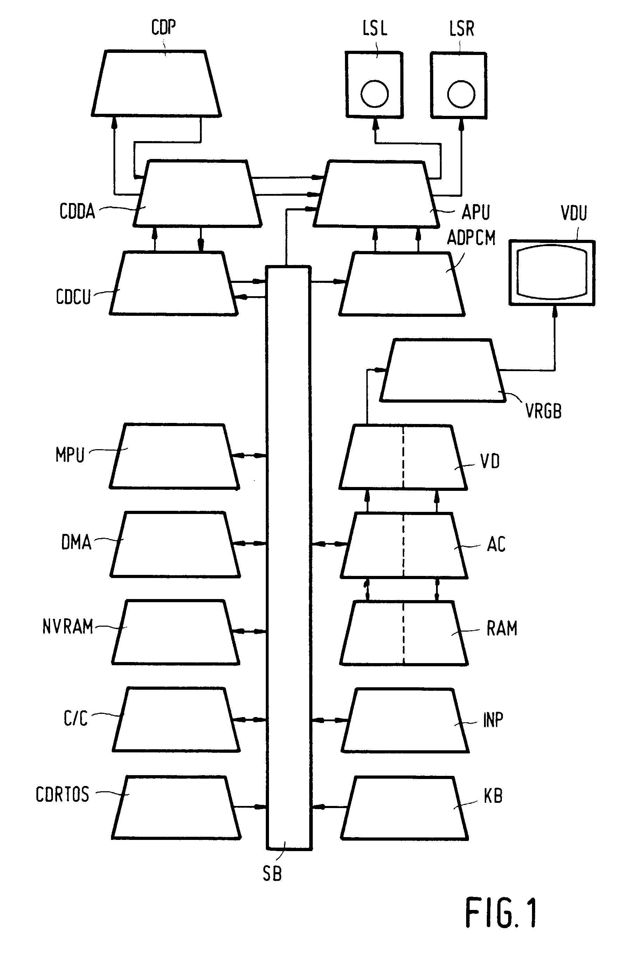

In Figure 1 the Compact Disc-Interactive (CD-I) player comprises a compact disc player module CDP to which is connected a compact disc digital audio controller decoder CDDA and a compact disc control unit CDCU. The decoder CDDA is connected to an audio processing unit APU which feeds two loudspeakers LSL and LSR. The CD control unit CDCU is connected to a system bus SB along which various digital signals are passed. Also connected to the system bus SB are a microprocessor unit MPU, a DMA controller DMA, a non-volatile random access memory NVRAM, a clock calendar unit C/C, a read-only memory containing the real-time operating system CDRTOS, a keyboard KB, a pointing device INP, and an access controller AC. The access controller controls the reading from and writing to a random access memory RAM which is split into two banks zero and one. The access controller is also connected to a video decoder VD which in turn feeds a video generator VRGB, the output of which is connected to a video display unit VDU. Also connected to the system bus SB is an adaptive pulse code modulation decoder ADPCM which feeds the audio processing unit APU. A description of the CD-I base case decoder as shown in Figure 1 is given in a textbook entitled "Compact Disc-Interactive, A Designer's Overview" edited by Philips International and published by Kluwer Technical Books, ISBN 9020121103.

The video decoder VD in the CD-I player can read picture information which has been transferred from a compact disc (CD-ROM) to the random access memory RAM, which leads to the generation of appropriate video signals for the VDU by the video generator VRGB. The Philips/Kluwer book describes how various picture coding formats are available. In particular, a mode called DYUV ('Delta-YUV') provides compact DPCM coding of natural colour photographs. A further mode is proposed for use in the production versions of CD-I, using motion compensation and Discrete Cosine Transform (DCT) coding to achieve data compressions high enough for full-screen, full-motion video pictures.

Other coding modes, using a colour look-up table (CLUT) in the decoder VD, allow coding of synthetic graphics and text images containing a limited range of colours. For all these modes, a standard 8-bit range of levels (0-255) is adopted for each of red, green and blue. In accordance with CCIR recommendations, black level is defined as 16, not zero, and peak white is defined as 235, not 255, to allow for some overshoot in the processing of the video signals. Furthermore, Photo CD images stored as absolute Y, U, V values, and images stored in other formats can be loaded into the RAM of the CD-I player and converted to DYUV format for display by means of the microprocessor and a suitable program. The program can be stored for example in a separate CD-I section of a Photo CD disc, in a manner transparent to the user. Even if the user does not require variable zoom and rotation facilities, the CD-I player itself may require to perform some horizontal or vertical expansion to correct for the difference between the aspect ratio of the stored pixels (square) and that of the displayed pixels (rectangular).

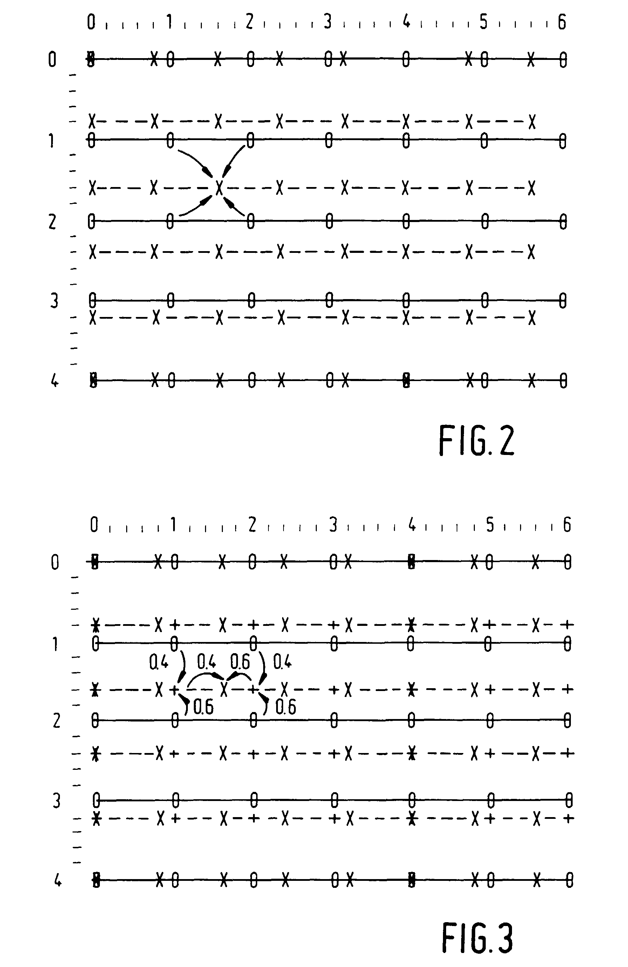

Figure 2 illustrates a zoom and filter operation for a small representative array of pixels. The input image is defined by rows 0 to 4 of input pixel values numbered 0 to 6 in each row and positioned on a square grid. The input pixel positions are represented by circles "o" at integer pixel positions (0,0), (0,1) and so forth. Of course in practice an image will comprise thousands of pixels, on a grid of 256 rows by 384 pixels, for example. An input pixel value is received for each circled position and each row of pixel values is stored in memory at a series of locations following a row start address. The rows may be stored sequentially, but this is not necessary as they can be addressed via a row table giving the start address of each successive row of the image.

For the sake of this example, each pixel value occupies one byte (8-bit value) and represents only one component of the pixel colour. In Photo CD, for example, luminance (Y) and chrominance (U and V) bytes are stored on the CD-ROM, but with four times as many Y as U or V. The skilled reader will appreciate that other component systems, notably RGB, can be used, and that the three components can in such systems be treated independently (taking due account of gamma correction and other non-linearities). The description presented here will concern the processing of one component value only, with any other components being processed in like manner.

In Figure 2 it is assumed for the sake of example that the user of the system has viewed the input image and now wishes to enlarge it by 25 per cent in each dimension. Diagonal crosses "x" indicate the output pixel positions which are required to be calculated for such an enlargement. A series of output pixel values could be generated merely by copying the nearest input pixel to each output pixel location. It is well-known that simply point sampling the input image in this way produces a poor image, however, and in the present embodiment it is desired to include some filtering by means of linear interpolation. The general problem for each output pixel then is to identify the four input pixel positions surrounding the output pixel position and blend the corresponding input pixel values in appropriate proportions. For example, the output value for position (1.6,1.6) requires contributions from the input values at (1,1), (1,2), (2,1) and (2,2).

Figure 3 shows how the bilinear interpolation of four input values to yield each output value can be reduced to two separate linear interpolations in the vertical and then the horizontal directions.

In a first operation, rows of intermediate pixel values "+" are generated from pairs of input pixel values in adjacent lines by linear interpolation. For example an intermediate value corresponding to position (1.6, 1.0) is interpolated from the input values for positions (1,1) and (2,1), and another intermediate value is generated for position (1.6, 2.0) by interpolation between the input values for positions (1,2) and (2,2). It may be noted that the only decision overhead per pixel in such an operation is to check for the end of the rows, since the fractional coefficients (0.6 and 0.4 for this row) are constant across the row, and every intermediate position "+" is at an integer position on the input pixel grid.

Having generated a row of intermediate pixel values for positions "+", horizontal scaling and interpolation between pairs of intermediate values is required to generate the output pixel values for positions "x". To generate the output value for position (1.6, 1.6) requires interpolation between the pair of intermediate values generated for positions (1.6, 1.0) and (1.6, 2.0).

To perform the required arithmetic operations efficiently, these input pixel values must be loaded from the memory to the internal registers of the microprocessor. In the generalised zooming and filtering operation of Figure 2, the steps conventionally performed for each output pixel value are:
(a) calculate output pixel position in terms of input pixel array;
(b) load required input pixel values in accordance with the integer part of the output pixel position, if not already loaded;
(c) combine the loaded input pixel values using coefficients dependent on the fractional part of the output pixel position;and
(d) store the resulting output pixel value.

It will be appreciated that for every output pixel a number of decisions are required in step (b), depending on the number of input pixel values that contribute to each output pixel. Step (c) in its turn includes a number of operations to select a fractional coefficient by which to multiply each input value. Even if the microprocessor has dedicated multiplier hardware, these selection operations can be very time-consuming.

Listing 1, presented as an appendix at the end of this description, is a 'C' language source code listing of a program to be run by the microprocessor MPU of the CD-I player to compile quickly a machine code program segment which when executed will generate one row of output pixels, scaled with linear interpolation from a row of input pixel values. A short example program segment generated for a particular set of parameter values is presented in Listing 2. From the following description, the skilled reader will appreciate that decisions are taken by the compiler of Listing 1 once only, so that the machine code row filter of Listing 2, although occupying more program memory than a conventional filter program, can generate row upon row of filtered pixel values without further decision overhead. The listings will be largely self-explanatory to the skilled reader familiar with the 'C' language, and with assembly language for the 68000 series of microprocessors, as used in the CD-I player. Of course equivalent code can be constructed for other microprocessors.

The first section (A) of the compiler program (Listing 1) defines certain constants which are at least parts of specific instructions for the target microprocessor. A constant LOADTOD0 is a 16-bit value 1018 (Hexadecimal). To the 68000 series microprocessor MPU, this is an instruction "move.b (a0)+,d0" for causing a single byte, found in a memory location specified by an address stored in internal address register a0, to be copied into internal data register d0, with a post-increment of the address in a0. On the assumption that the address in a0 is that of an input pixel value, this instruction can be used in the compiled row filter program to load an input pixel value from the memory, while updating the address in register a0 to point to the next input pixel value in the row. Constant LOADTOD1 = 1218 causes the pixel value to be loaded to register D1 (move.b (a0)+,d1).

Similarly, constant STOREFROMD0 is a 16-bit value 12CO (hexadecimal). To the microprocessor, this is the instruction "move.b d0,(a1)+" causing a single byte found in the internal data register d0 to be copied to a memory location specified by the address stored in internal address register a1, with an automatic post-increment of that stored address. Assuming that the address in register a1 points to a location where it is desired to store an output pixel value, this instruction can be used in the compiled program segment to write an output pixel value and increment the address in register a1 ready for storage of the next output pixel value. STOREFROMD1 and STOREFROMD2 perform the same function where the output pixel value to be stored is found in register d1 or d2 respectively.

The comment at B in Listing 1 confirms that registers a0 and a1 will be used to hold the address of a current input and output pixel values respectively. Also five registers a2 to a6 are used to store the base addresses of pre-stored look up tables which will be used to perform quick multiplication of pixel values. To limit the number of tables, coefficients will be quantised to units of 0.1 (tenths). Furthermore, since fractional coefficients f and (1-f) are generally used together, and there are only seven address registers available in total, each base address a2 to a6 refers to a pair of tables 0.1/0.9, 0.2/0.8, 0.3/0.7, 0.4/0.6, 0.5/0.5. The 0.1 table, for example, stores for each expected 8-bit pixel value an 8-bit value for 0.1 times that pixel value. The 0.1 table begins at location (a2) minus an offset of 120, while the 0.9 table begins at location (a2) plus an offset of 120. There are not a full 256 values in each look-up table, but because of the guard bands below black and above white there are not a full 256 expected pixel values. The pairs of tables are complementary even to the extent that the two tables for coefficient 0.5 are not identical: any rounding error in the first table entry is compensated in the second table entry.

In the execution of the compiled filter program, register d2 is used to accumulate weighted pixel values. The first words of the requisite machine code instructions are defined in parts C and D in the Listing 1. This first word must select the look-up table (by selecting a register a2 to a6), and nine different opcodes are required depending on whether a required fractional coefficient is 0.1, 0.2 and so on up to 0.9. Note that the third and seventh codes are the same (1434 hex), because the required look up table base address is in register a4 whether the fractional coefficient is 0.3 or 0.7. The codes at C in Listing 1 specify a byte is to be loaded (move.b) to register d2, from an effective address to be specified in the mode "address register indirect with index and displacement". The codes at D in Listing 1 specify a byte is to be added (add.b) to the contents of register d2, with similar addressing.

At E in Listing 1 a look-up table with 64 entries is defined for use in quantising a fractional value represented in 64ths to one represented in tenths.

At F the function "compile_filter" is defined which responds to the variables "outputsize", the number of output pixel values required, "zoomfactor", the horizontal scaling factor required, and "codebuff", an address in memory to where the machine code filter can be compiled. It is assumed that "zoomfactor" is in the range 0000 to FFFF (hex), representing a scaling factor of zero to 256, with a fractional precision of 8 bits. Thus for example zoomfactor=0140(hex) represents a scaling factor of 1.25 (25 percent expansion).

In the compiler function, various status variables are defined to keep track of the register contents and so forth: variables "samplein0" and "samplein1" identify the input pixel value in register d0 and d1 respectively, "inputposn" holds the position along the line of input values with an 16-bit fractional component; "output" is the output pixel value; "fractional" is the fractional part of "inputposn" truncated to 6 bits; "intposn" is the integer part of "inputposn"; "quantfrac" is "fraction" quantised by tenths (0.1, 0.2, 0.3 etc.); "basereg" indicates whether register d0 or d1 holds the left most input pixel value; "secondreg" indicates whether register d0 to d1 holds the following input pixel value; "regused0" and "regused1" are flags to indicate whether the register d0 or d1 is in use.

At G begins a "for" loop, to be executed once for every output pixel value from 0 to "outputsize". At H the variables listed above are initialised. At I it is checked whether the quantisation to tenths has pushed the sample position to the next input value. The two sample values required for interpolation correspond to input pixel positions "intposn" and "intposn" plus one. At J it is determined whether the first required sample value is already in a register d0 or d1, and the flags are set accordingly. At K it is determined whether the second value is already present.

At L, if the first required value is not present, it must be loaded to a register. The instruction "∗codeptr++=LOADTOD0" if executed causes the compiler to write the machine code instruction "move.b (a0)+,d0". Although the compiler has performed many decisions already, this is in fact the first instruction in the compiled machine code filter routine of Listing 2.

At M, if the second required value is not present it too must be loaded, but first it is checked whether "quantfrac" is zero. If so, then the output pixel coincides with an input value, and no interpolation is required. This is the case at position zero in all rows of the example image (Fig. 3). Consequently, the compiler proceeds at N to store a machine code command "move.b d0,(a1)+". After only two instructions in the compiled filter of Listing 2, the first output pixel value will have been stored.

If interpolation between two values is required, as for the second output value at horizontal position 0.8, for example, then at P and Q two machine code instructions are generated, with bit fields dependent on the quantised interpolation coefficients and on the register usage. The first instruction is "move.b" instruction which uses the quantised function to address a value in the appropriate look-up table and store it in register d2. Thus for example in line 4 of Listing 2, address register a3 is used to address the 0.2/0.8 table, and displacement T1=-120 is used because the first input value is to be multiplied by 0.2, not 0.8. Thus 0.2 times the first input pixel value is loaded from the look-up table into register D2. The next instruction is an "add.b" instruction, such that (in line 5 of Listing 2) 0.8 times the second input pixel value is added to register d2. At R the instruction "move.b d2,(a1)+" is written to provide for storage of the interpolated output pixel alone.

When all output values have been dealt with, a return from subroutine instruction "rts" is appended to the compiled program segment (line 28 of Listing 2), so that it may be called as a subroutine. Listing 2 presents a complete compiled filter for generating a row of eight output pixel values ("outputsize"=8), starting from position 0 with a scaling factor of 1.25. This can be used to generate any of the rows of output values "x" in Figure 3 from input values which are the intermediate values "+". While lines 4 and 5 of Listing 2 have encoded within them a coefficient pair 0.2/0.8, lines 8 and 9 encode 0.4/0.6, lines 12 and 13 encode 0.6/0.4, lines 16 and 17 encode 0.8/0.2, and line 19 encodes the straight copying of the fifth input pixel value to form the sixth output pixel value.

While many decisions were made by the compiler before arriving at each line of the compiled listing, it will be noted that all decisions on a per-pixel basis have been eliminated from the filter routine of Listing 2. It will now be illustrated how a large speed advantage can be gained by repeated use of this compiled filter to generate the lines of an output image.

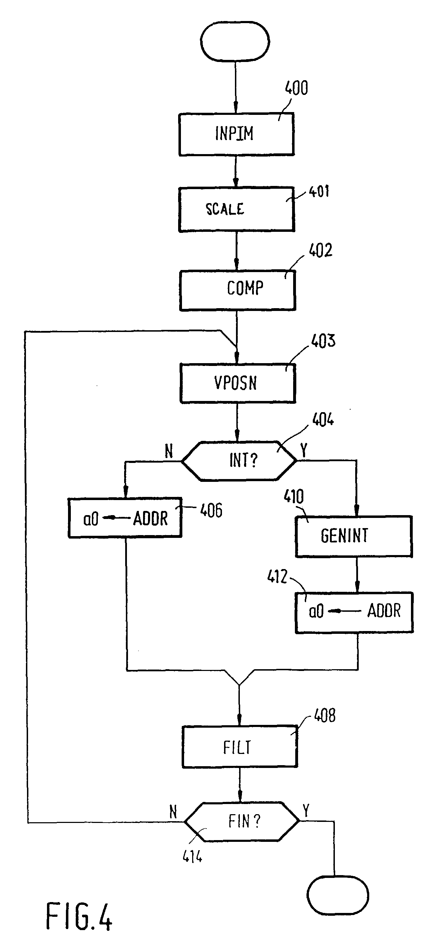

Figure 4 shows in flowchart form a routine for achieving the uniform scaling by a variable factor using the compiled filter. In fact the flow chart will be broadly similar for any process implemented with a compiled processing function according to the invention, with only the detail changing within the individual steps.

At 400 information is received of the locations of rows of input pixel values. At 401 the apparatus receives from the user the desired scaling factors, cropping information and so forth. At 402 a filter subroutine is compiled and the filtering can begin. At 403 a current vertical position is determined, taking into account the cropping information and the vertical scaling factor. At 404 it is determined whether interpolation is required to generate the intermediate row. For the example of Figure 3 the vertical position is initially zero, since the first intermediate row ("+") coincides with the first input row ("o"). In such a case, the address of the first value in the relevant input row is loaded at 406 into address register a0 and the compiled filter is executed at 408 to generate the output values by horizontal scaling and interpolation. If vertical interpolation is required, this is performed at 410 to generate a row of intermediate pixel values ("+"). At 412 the address of the row of intermediate values is loaded into register a0 and the compiled filter is again executed at 408. At 414 it is determined if all rows of the output image have been generated. If not, control returns to 403 where a new vertical position is calculated and the process repeats.

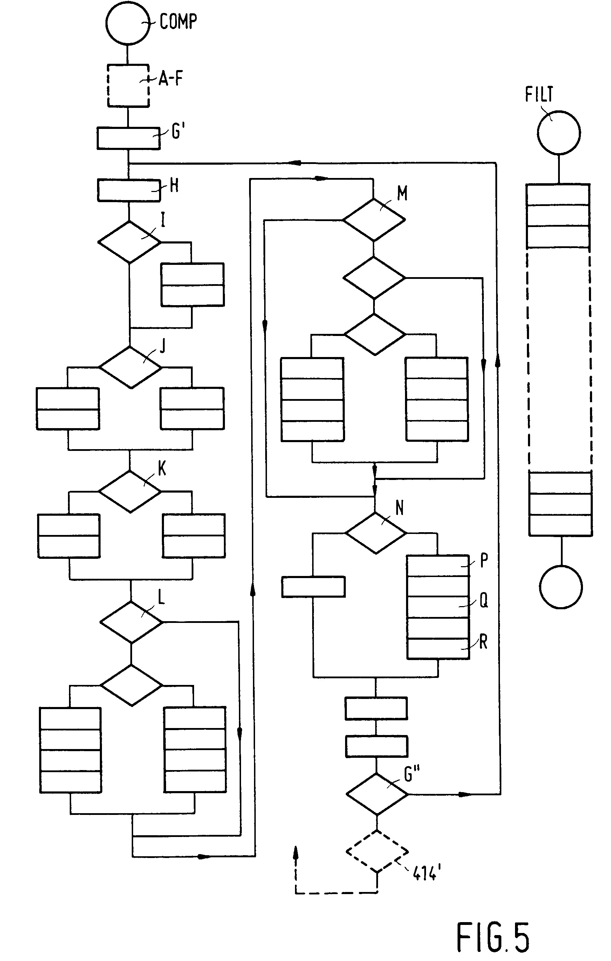

Figure 5 shows schematic flowcharts COMP and FILT corresponding to the compiling routine of step 402 (Listing 1) and the compiled row filter routine 408 (Listing 2). The individual steps of the routines are not identified in the flowchart for reasons of space but the step reference letters A to R of Listing 1 are included in the flowchart COMP, to aid the comparison. The flowchart uses the normal convention to distinguish between simple actions, shown as rectangular boxes, and decision points, shown as diamond (rhomboid) boxes. Thus the "if" statement at J in Listing 1 translates to a diamond box in flowchart COMP, while the "for" statement at G in Listing 1 translates to a simple action G' to set up a loop counter and a decision at G'' to detect the end of the "for" loop (when "output" equals "outputsize").

As described above, the steps H-R and the test at G'' are executed once for every output pixel value to be generated by the compiled row filter routine FILT. The compiling process COMP therefore includes no less than ten decision points (conditional branches) for every pixel of the row. The flowchart FILT shows that the compiled row filter of Listing 2 includes only a linear sequence of simple actions, with no decision points. In the method of Figure 4 step 402 (COMP) is performed only once for the image, while step 408 (FILT) is performed for every row of the image to be filtered, with a decision 414 per row to detect the last row of the image. For the whole image the number of decisions involved is therefore ten times the number of pixels in a row plus one times the number of rows. For a modest output image of 256 rows by 384 pixels for example, this formula gives an "overhead" of 4096 decisions in addition to the actions necessary to generate the output image pixel values.

By way of comparison, a conventional generic filter routine would perform a process corresponding effectively to the step 402 (COMP) for every row of the image, as illustrated by step 414' in broken lines in Figure 5. This would then involve performing the same ten decisions (loop H to G") for every single pixel of the image. To implement a variable filter using a conventional software method would thus involve an overhead of nearly a million decisions for the same size of image. With any typical microprocessor this overhead will add significantly to the time taken to filter the image. The skilled reader will appreciate that the decision overhead required in the novel filter implementation of Figure 4 is comparatively negligible, and leads to a much faster filtering of images. Moreover, when the image height and width are doubled to 512 rows by 768 pixels, the decision overhead by the conventional method will quadruple, while that by the novel method will only double.

The invention is of course not limited to zoom and filter operations, nor is the filtering limited to linear interpolation. Rotations may also be effected, either directly or as a succession of two shear operations, as is known in the art. For such operations, the skilled reader will appreciate that the current pixel position ("inputposition" in Listing 1) will vary in two dimensions, not just along a row. Many other variations will be apparent, for example in the number of input samples being combined (kernel size), the use of hardware multipliers instead of look-up tables and so forth. On the other hand, the compiled filter program segment will occupy some kilobytes of program memory while in use.

From reading the present disclosure, other variations will be apparent to persons skilled in the art. Such variations may involve other features which are already known in the design, manufacture and use of image processing arrangements, microprocessor display systems and component parts thereof and which may be used instead of or in addition to features already described herein.

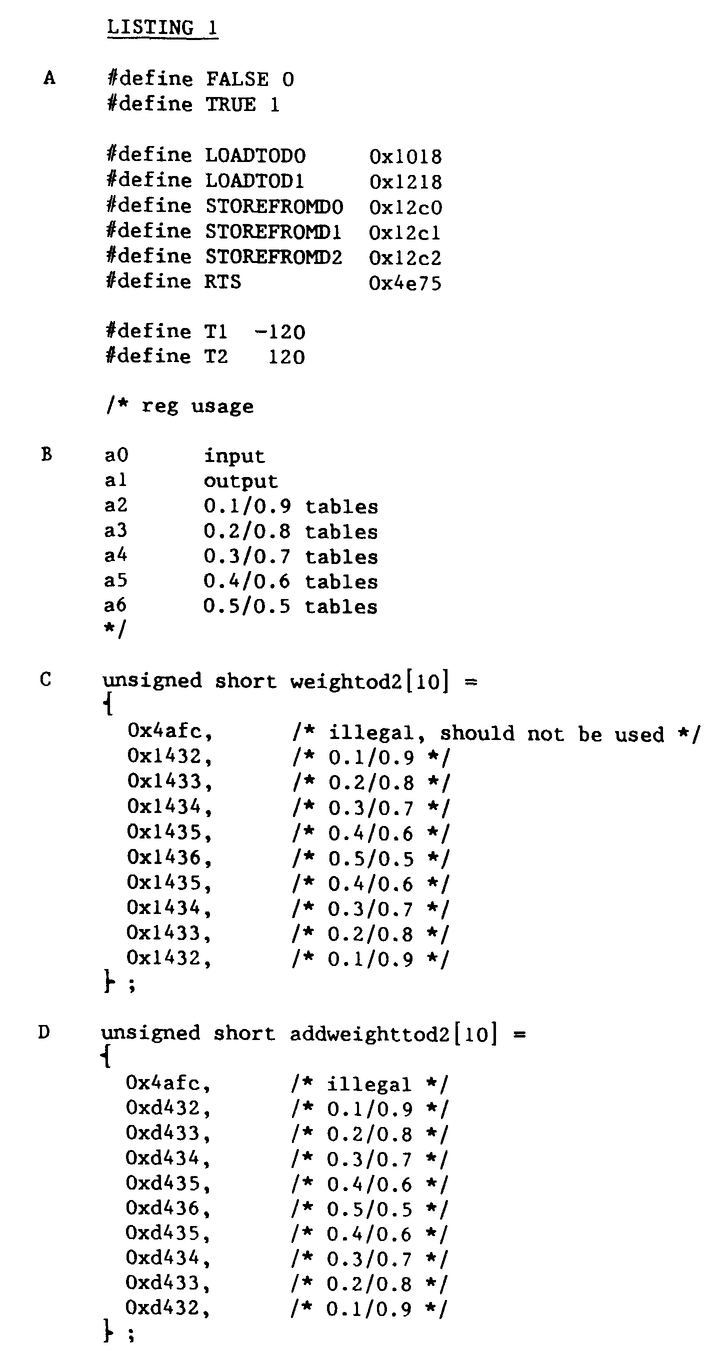

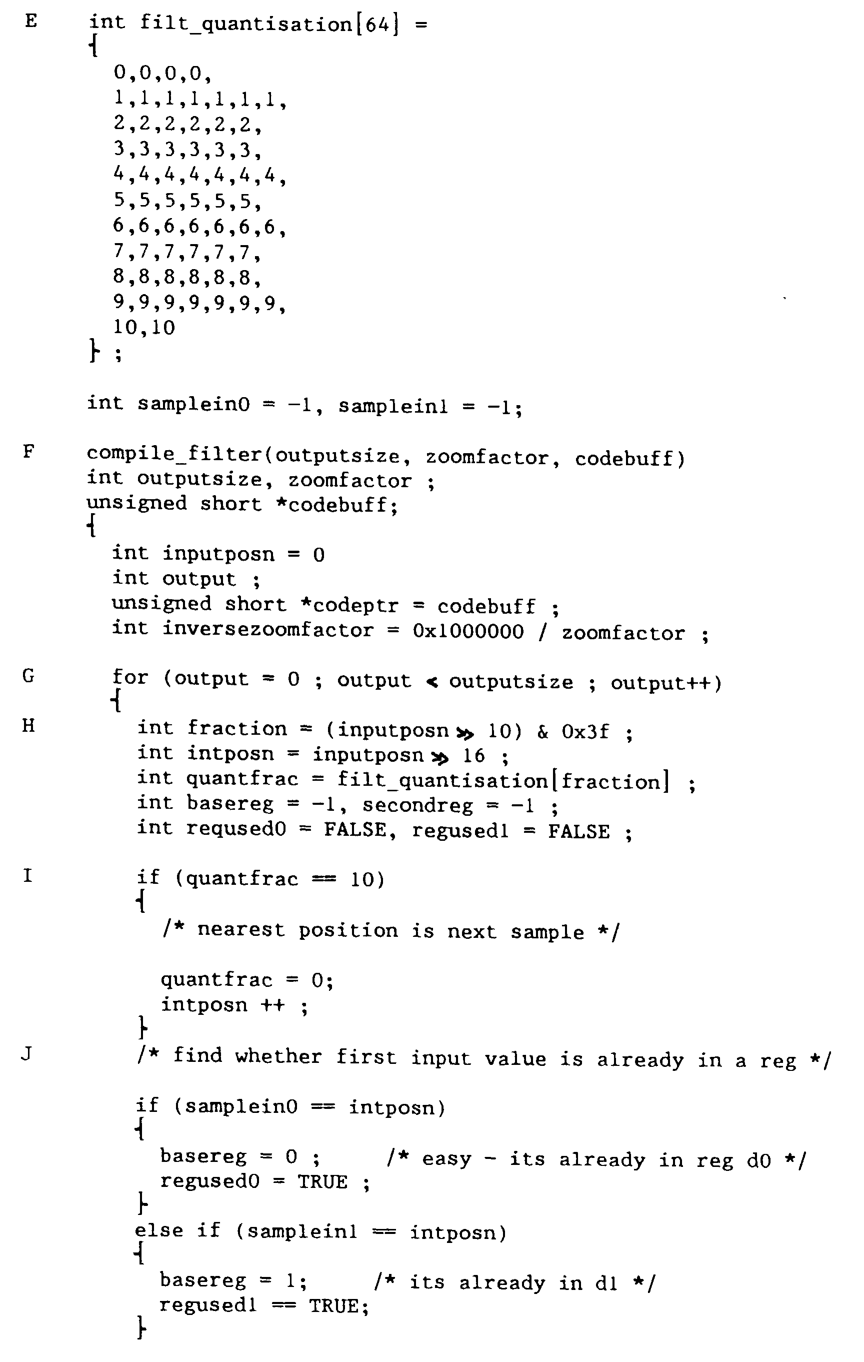

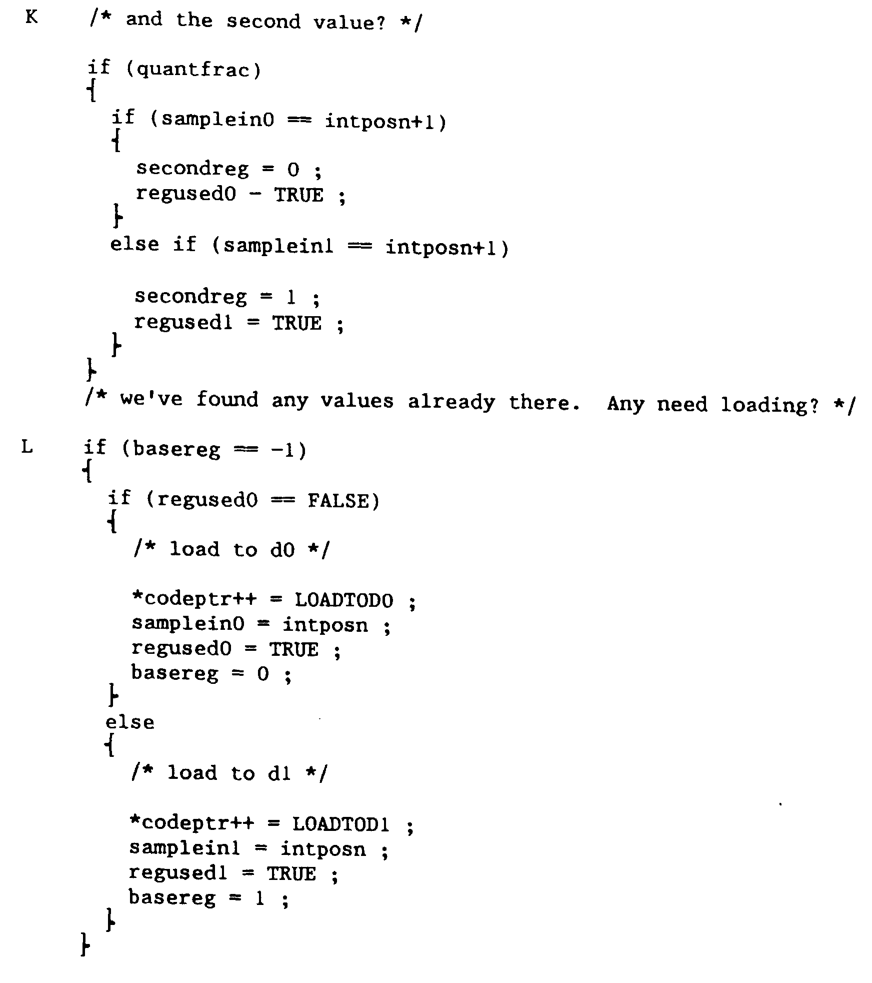

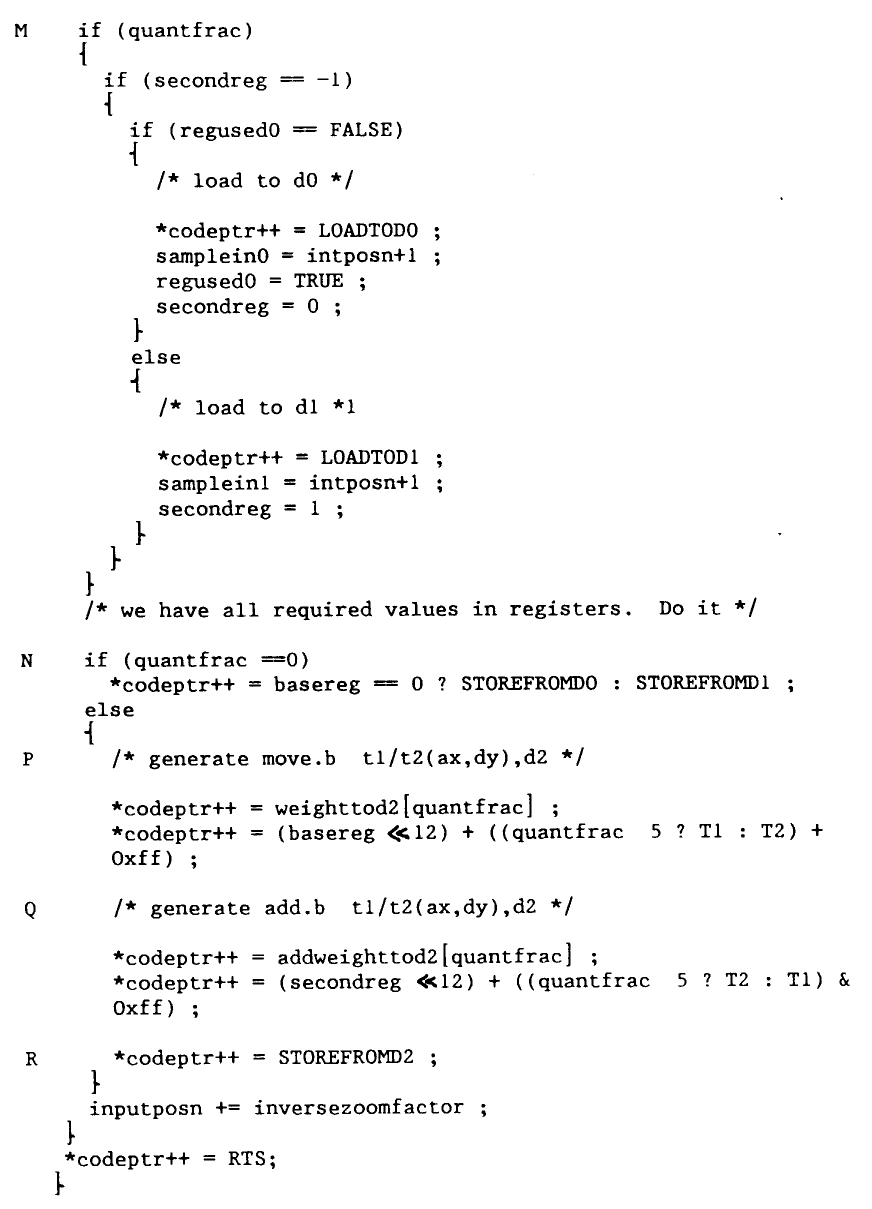

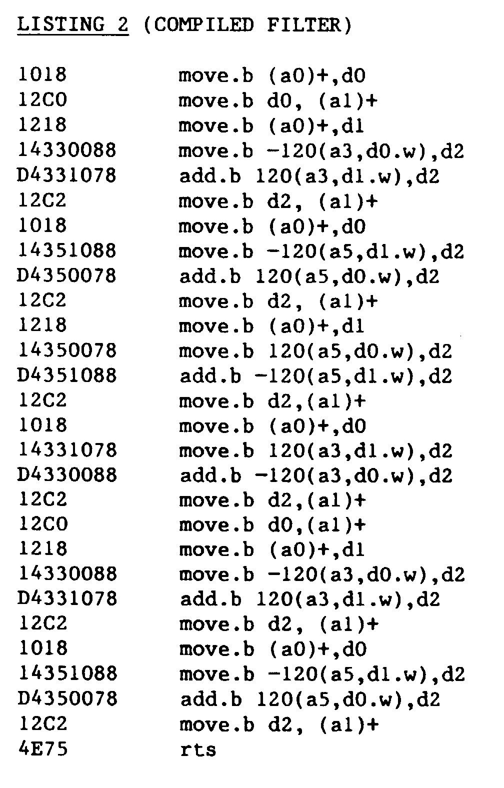

## Claims

1. An image processing apparatus comprising image memory means (RAM) for the storage of an input array of pixel values defining an input image and a microprocessor (MPU) operating under control of a program stored in a program memory to systematically select pixel values of the input array to generate successive output pixel values defining an output image, said systematic selection being dependent on at least one parameter value received (401) by the apparatus, the programmed microprocessor (MPU) forming means (402) responsive to the received parameter value for generating and storing in the program memory at least one machine code program segment, specific to the received parameter value;
characterised in that said machine code program segment controls the microprocessor to systematically select pixel values of the input image to generate a subset of pixel values of the output image each time said machine code program segment is executed, and in that means (408) are provided for causing repeated execution of the generated program segment or segments so as to generate a plurality of subsets of pixel values accumulating to define the output image, wherein each of said subsets of output pixels comprises one pixel row of the output image.

2. An apparatus as claimed in Claim 1 wherein the at least one parameter value comprises a horizontal scaling factor relating the pixel positions of each generated row of output pixel values to the positions of a corresponding row of input pixels.

3. An apparatus as claimed in Claim 2, wherein a further received parameter is a vertical scaling factor, the apparatus further comprising means for calculating (403,404) before each execution of the generated program segment an incremented vertical pixel position in accordance with the vertical scaling factor and:
(i) if the incremented vertical pixel position coincides with a pixel row of the input image using said pixel row as the input row for the execution of the generated program segment (406) or
(ii) if the incremented vertical pixel position falls between two pixel rows of the input image generating (410) an interpolated row of pixel values for use (412) as the input row for the execution of the generated program segment.

4. A method of image processing comprising storing (400) an input array of pixel values defining an input image and systematically selecting pixel values of the input array to generate successive output pixel values defining an output image, the system of selection being dependent on at least one received parameter value (401), and the selection process comprising generating and storing (402) at least one machine code program segment, specific to the received parameter value;
characterised in that the machine code program segment controls the systematic selection of pixel values of the input image to generate a subset of pixel values of the output image each time it is executed, and the method further comprising the step of repeatedly executing (408) the generated program segment or segments so as to generate a plurality of subsets of pixel values accumulating to define the output image, with each subset of output pixels comprising one pixel row of the output image.

5. A method as claimed in Claim 4 wherein the at least one parameter value comprises a horizontal scaling factor relating the pixel positions of each generated row of output pixel values to the positions of a corresponding row of input pixels.

6. A method as claimed in Claim 5, wherein a further received parameter is a vertical scaling factor, the method further comprising calculating (403,404), before each execution of the generated program segment, an incremented vertical pixel position in accordance with the vertical scaling factor and:
(i) if the incremented vertical pixel position coincides with a pixel row of the input image using said pixel row as the input row for the execution of the generated program segment (406) or
(ii) if the incremented vertical pixel position falls between two pixel rows of the input image generating (410) an interpolated row of pixel values for use (412) as the input row for the execution of the generated program segment.

## Patentansprüche

1. Bildverarbeitungsvorrichtung, die folgendes enthält: Bildspeichermittel (RAM) zum Speichern einer Eingangsmatrix aus Bildelementwerten, die ein Eingangsbild definieren, und einen Mikroprozessor (MPU), der von einem in einem Programmspeicher gespeicherten Programm gesteuert wird, zur systematischen Auswahl von Bildelementwerten der Eingangsmatrix zur Erzeugung von aufeinanderfolgenden Ausgangsbildelementwerten, die ein Ausgangsbild definieren, wobei die genannte systematische Auswahl von mindestens einem von der Vorrichtung empfangenen Parameterwert (401) abhängt, und wobei der programmierte Mikroprozessor (MPU) Mittel (402) bildet, die auf den empfangenen Parameter reagieren, um im Programmspeicher mindestens einen für den empfangenen Parameterwert spezifischen Maschinencode-Programmabschnitt zu erzeugen und zu speichern;
dadurch gekennzeichnet, daß der genannte Maschinencodeabschnitt den Mikroprozessor so steuert, daß er systematisch Bildelementwerte des Eingangsbildes auswählt, um bei jeder Ausführung des Maschinencode-Programmabschnitts eine untergeordnete Gruppe von Bildelementwerten des Ausgangsbildes zu erzeugen, und daß Mittel (408) geschaffen werden, die eine wiederholte Ausführung des/der erzeugten Programmabschnitts/-abschnitte bewirkt, so daß eine Vielzahl von untergeordneten Gruppen aus Bildelementwerten erzeugt wird, die zusammen das Ausgangsbild definieren, wobei jede der untergeordneten Gruppen aus Ausgangsbildelementen eine Bildelementzeile des Ausgangsbildes enthält.

2. Vorrichtung nach Anspruch 1, wobei der mindestens eine empfangene Parameterwert einen horizontalen Skalierfaktor enthält, der die Bildelementpositionen jeder erzeugten Zeile von Ausgangsbildelementwerten zu den Positionenen einer entsprechenden Zeile von Eingangsbildelementwerten in Beziehung setzt.

3. Vorrichtung nach Anspruch 2, wobei ein weiterer empfangener Parameter ein vertikaler Skalierfaktor ist und die Vorrichtung außerdem Mittel (404) enthält, um vor jeder Ausführung des erzeugten Programmabschnitts eine um Eins erhöhte vertikale Bildelementposition in Übereinstimmung mit dem vertikalen Skalierfaktor zu berechnen und
(i) wenn die um Eins erhöhte vertikale Bildelementposition mit einer Bildelementzeile des Eingangsbildes zusammenfällt, die genannte Bildelementzeile als Eingangszeile für die Ausführung des erzeugten Programmabschnitts (406) zu verwenden, oder
(ii) wenn die um Eins erhöhte vertikale Bildelementposition zwischen zwei Bildelementzeilen des Eingangsbildes fällt, eine interpolierte Zeile aus Bildelementwerten zu erzeugen (410), die als Eingangszeile für die Ausführung des erzeugten Programmabschnitts verwendet wird (412).

4. Verfahren der Bildverarbeitung, das folgendes beinhaltet: das Speichern (400) einer Eingangsmatrix aus Bildelementwerten, die ein Eingangsbild definieren, und das systematische Auswählen von Bildelementwerten aus der Eingangsmatrix, um aufeinanderfolgende Ausgangsbildelementwerte zu erzeugen, die ein Ausgangsbild definieren, wobei das Auswahlsystem von mindestens einem empfangenen Parameterwert (401) abhängt und der Auswahlvorgang das Erzeugen und Speichern (402) von mindestens einem für den empfangenen Parameterwert spezifischen Maschinencode-Programmabschnitt umfaßt;
dadurch gekennzeichnet, daß der Maschinencode-Programmabschnitt die systematische Auswahl von Bildelementwerten des Eingangsbildes so steuert, daß jedes Mal, wenn er ausgeführt wird, eine untergeordnete Gruppe aus Bildelementwerten des Ausgangsbildes jedes Mal erzeugt wird, und daß das Verfahren außerdem den Schritt der wiederholten Ausführung (408) des erzeugten Programmabschnitts oder der erzeugten Programmabschnitte umfaßt, um eine Vielzahl von untergeordneten Gruppen aus Bildelementwerten zu erzeugen, die zusammen das Ausgangsbild definieren, wobei jede untergeordnete Gruppe aus Ausgangsbildelementen eine Bildelementzeile des Ausgangsbildes enthält.

5. Verfahren nach Anspruch 4, wobei der mindestens eine Parameterwert einen horizontalen Skalierfaktor enthält, der die Bildelementpositionen jeder erzeugten Zeile von Ausgangsbildelementwerten zu den Positionenen einer entsprechenden Zeile von Eingangsbildelementwerten in Beziehung setzt.

6. Verfahren nach Anspruch 5, wobei ein weiterer empfangener Parameter ein vertikaler Skalierfaktor ist und die Vorrichtung außerdem Mittel (404) enthält, um vor jeder Ausführung des erzeugten Programmabschnitts eine um Eins erhöhte vertikale Bildelementposition in Übereinstimmung mit dem vertikalen Skalierfaktor zu berechnen und
(i) wenn die um Eins erhöhte vertikale Bildelementposition mit einer Bildelementzeile des Eingangsbildes zusammenfällt, die genannte Bildelementzeile als Eingangszeile für die Ausführung des erzeugten Programmabschnitts (406) zu verwenden, oder
(ii) wenn die um Eins erhöhte vertikale Bildelementposition zwischen zwei Bildelementzeilen des Eingangsbildes fällt, eine interpolierte Zeile aus Bildelementwerten zu erzeugen (410), die als Eingangszeile für die Ausführung des erzeugten Programmabschnitts verwendet wird (412).

## Revendications

1. Dispositif de traitement d'images comprenant un dispositif de mémorisation d'images (RAM) pour le stockage d'une matrice d'entrée de valeurs de pixels définissant une image d'entrée et un microprocesseur (MPU) fonctionnant sous le contrôle d'un programme stocké dans une mémoire de programme afin de sélectionner systématiquement des valeurs de pixels de la matrice d'entrée pour produire des valeurs successives de pixels de sortie définissant une image de sortie, ladite sélection systématique dépendant d'au moins une valeur de paramètre reçue (401) par le dispositif, et le microprocesseur programmé (MPU) constituant un dispositif (402) sensible à la valeur de paramètre reçue pour produire et stocker dans la mémoire de programme au moins un segment de programme en code machine, spécifique à la valeur de paramètre reçue, caractérisé en ce que ledit segment de programme en code machine commande le microprocesseur pour sélectionner systématiquement des valeurs de pixels de l'image d'entrée afin de produire un sous-jeu de valeurs de pixels de l'image de sortie chaque fois que ledit segment de programme en code machine est exécuté et en ce que des moyens (408) sont prévus pour provoquer l'exécution répétée du ou des segments de programme produits de façon à produire une pluralité de sous-jeux de valeurs de pixels s'accumulant pour définir l'image de sortie, chacun desdits sous-jeux de pixels de sortie comprenant une rangée de pixels de l'image de sortie.

2. Dispositif suivant la revendication 1, dans lequel au moins une valeur de paramètre comprend un facteur de mise à l'échelle horizontale reliant les positions de pixels de chaque rangée produite de valeurs de pixels de sortie aux positions d'une rangée correspondante de pixels d'entrée.

3. Dispositif suivant la revendication 2, dans lequel un autre paramètre reçu est un facteur de mise à l'échelle verticale, le dispositif comprenant en outre un moyen pour calculer (404), avant chaque exécution du segment de programme produit, une position de pixel verticale incrémentée en conformité avec le facteur de mise à l'échelle verticale et :
(i) si la position verticale incrémentée du pixel coïncide avec une rangée de pixels de l'image d'entrée, utiliser ladite rangée de pixels comme rangée d'entrée pour l'exécution du segment de programme produit (406) ou
(ii) si la position verticale incrémentée du pixel tombe entre deux rangées de pixels de l'image d'entrée, produire (410) une rangée interpolée de valeurs de pixels pour l'utiliser (412) comme rangée d'entrée pour l'exécution du segment de programme produit.

4. Procédé de traitement d'images comprenant le stockage (400) d'une matrice d'entrée de valeurs de pixels définissant une image d'entrée et la sélection systématique de valeurs de pixels de la matrice d'entrée pour produire des valeurs de pixels de sortie successives définissant une image de sortie, le système de sélection dépendant d'au moins une valeur de paramètre reçue (401) et le processus de sélection comprenant la production et le stockage (402) d'au moins un segment de programme en code machine spécifique à la valeur de paramètre reçue, caractérisé en ce que le segment de programme en code machine commande la sélection systématique de valeurs de pixels de l'image d'entrée afin de produire un sous-jeu de valeurs de pixels de l'image de sortie chaque fois qu'il est exécuté et le procédé comprenant en outre l'étape d'exécution répétée (408) du ou des segments de programme produits afin de produire une pluralité de sous-jeux de valeurs de pixels s'accumulant pour définir l'image de sortie, chaque sous-jeu de pixels de sortie comprenant une rangée de pixels de l'image de sortie.

5. Procédé suivant la revendication 4, dans lequel au moins une valeur de paramètre comprend un facteur de mise à l'échelle horizontale reliant les positions de pixels de chaque rangée produite de valeurs de pixels de sortie aux positions d'une rangée correspondante de pixels d'entrée.

6. Procédé suivant la revendication 5, dans lequel un autre paramètre reçu est un facteur de mise à l'échelle verticale, le procédé comprenant en outre le calcul (404), avant chaque exécution du segment de programme produit, d'une position verticale incrémentée en conformité avec le facteur de mise à l'échelle verticale et :
(i) si la position verticale incrémentée du pixel coïncide avec une rangée de pixels de l'image d'entrée, l'utilisation de ladite rangée de pixels comme rangée d'entrée pour l'exécution du segment de programme produit (406) ou
(ii) si la position verticale incrémentée du pixel tombe entre deux rangées de pixels de l'image d'entrée, la production (410) d'une rangée interpolée de valeurs de pixels pour l'utiliser (412) comme rangée d'entrée pour l'exécution du segment de programme produit.
